Europäisches Patentamt

European Patent Office

Office européen des brevets

(19)

(11) EP 1 432 261 A1

(12) **EUROPEAN PATENT APPLICATION**

(43) Date of publication:
23.06.2004 Bulletin 2004/26

(51) Int Cl.⁷: **H04Q 7/38**, H04L 12/56

(21) Application number: 02028630.8

(22) Date of filing: 20.12.2002

| | |
|---|---|
| (84) Designated Contracting States:<br>**AT BE BG CH CY CZ DE DK EE ES FI FR GB GR**<br>**IE IT LI LU MC NL PT SE SI SK TR**<br>Designated Extension States:<br>**AL LT LV MK RO**<br><br>(71) Applicant: **MATSUSHITA ELECTRIC INDUSTRIAL**<br>**CO., LTD.**<br>**Kadoma-city, Osaka 571-8501 (JP)** | (72) Inventors:<br>• **Seidel, Eiko**<br>**64285 Darmstadt (DE)**<br>• **Petrovic, Dragan**<br>**64295 Darmstadt (DE)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Receiver specific data manipulation in a communication system**

(57)     The present invention is related to communication systems comprising transmitters and receivers in communication with one another using a control channel and a shared data channel for data transmission. To ensure secure data delivery to one or more legitimate receivers the present invention provides a transmitter which modifies the transmission data to be transmitted via said shared data channel in accordance with a receiver specific identifier, signals to said receiver via the control channel to receive said modified transmission data and transmits said modified transmission data over the shared data channel. The receiver monitors said control channel for an indication to receive transmission data which have been modified at the transmitter in accordance with a receiver specific identifier, receives said modified transmission data on said shared data channel and reconstructs said transmission data from said modified transmission data in accordance with said receiver specific identifier.

MAC-hs PDU

- CRC field calculation
- Bit scrambling
- Code block segmentation
- Channel coding
- Rate matching
- Hybrid ARQ
- Interleaving
- Constellation rearrangement for 16QAM
- Physical channel mapping

User Equipment Identifier (UE ID)

Physical channels

Figure 1

EP 1 432 261 A1

**Description**

The present invention is related to communication systems comprising transmitters and receivers in communication with one another using a control channel and a shared data channel for data transmission.

High Speed Downlink Packet Access (HSDPA) is a new technique that is standardized in UMTS Release 5. It shall provide higher data rates in the downlink by introducing enhancements at the air interface such as adaptive modulation and coding. HSDPA relies on Hybrid Automatic Repeat Request protocol (HARQ) Type II/III, rapid selection of users using shared channels and adaptation of transmission format parameters according to the time varying channel conditions.

The High Speed Downlink Shared Channel (HS-DSCH) is a high rate downlink transport channel for data transmission shared by several user equipments (UEs). The shared data channel (HS-DSCH) is transmitted over the entire cell or over parts of the cell using e.g. beam-forming antennas. The shared data channel is associated with one downlink Dedicated Physical Channel (DPCH) to provide functions as transmitting pilot bits and transmit power control commands. Furthermore, there are one or several shared control channels (HS-SCCH). The shared control channel is a fixed rate downlink physical channel (e.g. 60 kbps, spreading factor SF=128) used to carry downlink signaling related to shared data channel transmissions. The signaling on the control channel is used to indicate to a receiver that transmission data for the informed receiver are about to be send to it via the shared data channel. For each transmission time interval (TTI) in which data via the shared data channel are transmitted, each shared control channel carries shared data channel-related downlink signaling for one UE (e.g. used codes, modulation scheme, transport block size). Only if the control channel information is received, the UE has the information to receive, despread and decode the shared data channel.

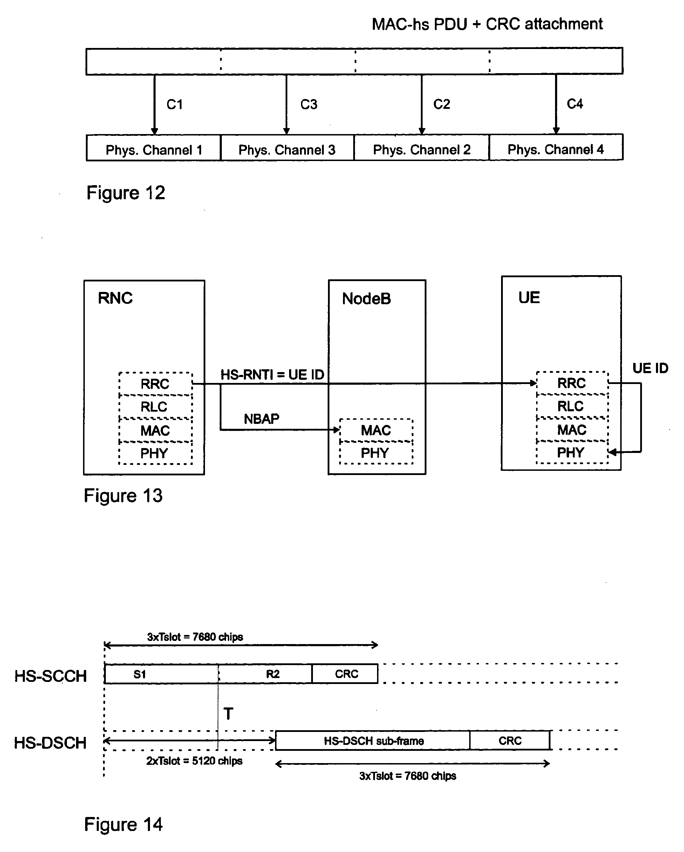

There is a fixed time offset between the start of the shared control channel (HS-SCCH) information (indication) and the start of the corresponding shared data channel information (transmission data) as seen in Figure 14. The shared data channel is carried by the High Speed Physical Downlink Shared Channel (HS-PDSCH).

The number of control channels as seen from the UE's point-of-view can range from a minimum of one control channel to a maximum of four control channels. The UE has the capability to monitor up to four control channels simultaneously.

The control channel carries a UE identifier (e.g. in a UE-specific cyclic redundancy check field) that identifies the UE for which it is carrying the information necessary for decoding the HS-PDSCH. The UE identifies the control channel carrying information for it by de-scrambling the first part of the control channel by the UE identity. This part contains the canalization code set and the modulation scheme for the shared data channel allocation with the second part containing the transport block size and Hybrid ARQ related information (Hybrid-ARQ process information, Redundancy and Constellation version). One cyclic redundancy check (CRC) is calculated over both parts and attached to the control channel information. The UE identifier (UE ID) is similar to the shared data channel Radio Network Temporary Identity (HS-RNTI). The term UE ID is used on the physical layer PHY, while the term HS-RNTI is used in the radio resource control RRC layer. This identifiers uniquely identify a UE within the cell.

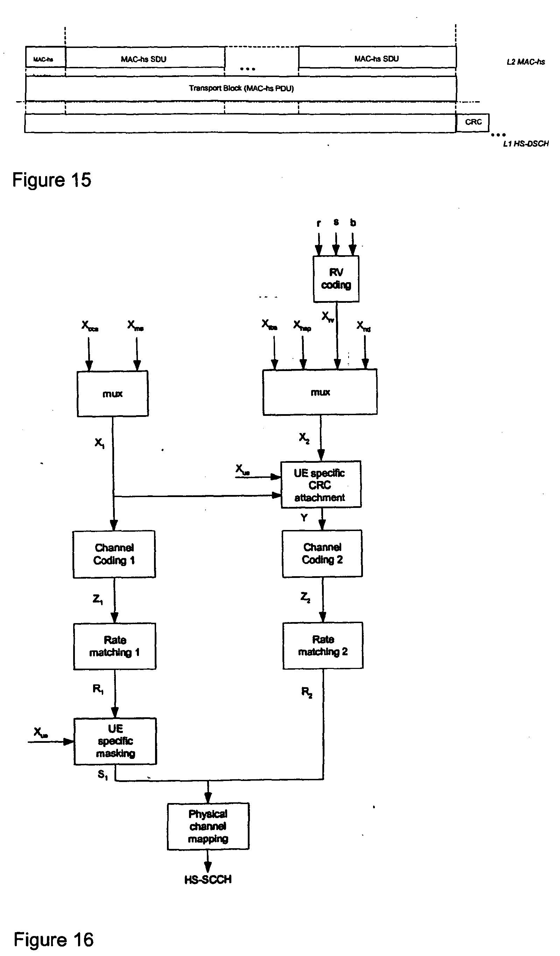

In Figure 15 it is shown how different MAC-d SDUs are concatenated to form a data transmitted via the physical channels. The transmitted data are secured by a CRC field. Besides the shared control channel signaling carried on the control channel there is in-band signaling on shared data channel within the Medium Access Control header (MAC-hs header) of MAC-hs protocol data unit (PDU). These parameters are for instance signaled to support to identify the reordering queue (by means of a priority class identifier) and to provide in-sequence delivery (by means of transmission sequence numbers) at the UE. These parameters are protected by the same physical layer CRC as the PDU Data block.

Figure 16 shows the encoding chain used to encode the data transmitted via the shared control channel as an allocation message. As shown in the Figure, information such as a channelization-code-set $x_{ccs}$, modulation scheme information $x_{ms}$, transport-block size information $x_{tbs}$, Hybrid-ARQ process information $x_{hap}$, redundancy and constellation version information $x_{rv}$, a new data indicator $x_{nd}$ and a receiver specific identifier, i.e. a user equipment identity $x_{ue}$ is transmitted in the control channel information indicating to a receiver to receive data on the shared data channel. These parameters are needed by the receiver to successfully receive and reconstruct the data directed to it on the shared data channel. Figure 16 shows how these parameters are multiplexed, coded and mapped to the shared control channel. The realization of these functions are described in the following:

The 16 bit UE identity is mapped such that $x_{ue,1}$ corresponds to the Most Significant Bit and $x_{ue,16}$ to the Least Significant Bit. The channelization-code-set information $x_{ccs,1}, x_{ccs,2}, ..., x_{ccs,7}$ and modulation-scheme information $x_{m,1}$ are multiplexed together. This gives a sequence of bits $x_{1,1}, x_{1,2}, ..., x_{1,8}$ where

$$x_{1,i} = x_{ccs,i} \qquad i=1,2,...,7$$

$$x_{1,i} = x_{ms,i-7} \qquad i=8$$

The transport-block-size information $x_{tbs,1}$, $x_{tbs,2}$, ..., $x_{tbs,6}$, Hybrid-ARQ-process information $x_{hap,1}$, $x_{hap,2}$, $x_{hap,3}$, redundancy version information $x_{rv,1}$, $x_{rv,2}$, $x_{rv,3}$ and the new data indicator $x_{nd,1}$ are multiplexed together. This gives a sequence of bits $x_{2,1}$, $x_{2,2}$, ..., $x_{2,13}$ where

$$x_{2,i} = x_{tbs,i} \qquad i=1,2,...,6$$

$$x_{2,i} = x_{hap,i-6} \qquad i=7,8,9$$

$$x_{2,i} = x_{rv,i-9} \qquad i=10,11,12$$

$$x_{2,i} = x_{nd,i-12} \qquad i=13$$

From the sequence of bits $x_{1,1}$, $x_{1,2}$, ..., $x_{1,8}$, $x_{2,1}$, $x_{2,2}$, ..., $x_{2,13}$ a 16 bits CRC attachment for shared control channel is calculated.

The calculation of the CRC field gives a sequence of bits $c_1$, $c_2$, ..., $c_{16}$. This sequence of bits is then masked with the UE Identity $x_{ue,1}$, $x_{ue,2}$, ..., $x_{ue,16}$ and then appended to the sequence of bits $x_{2,1}$, $x_{2,2}$, ..., $x_{2,13}$ to form the sequence of bits $y_1$, $y_2$, ..., $y_{29}$, where

$$y_i = x_{2,i} \qquad i=1,2,...,13$$

$$y_i = (c_{i-13} + x_{ue,i-13}) \, mod \, 2 \qquad i=14,15,...,29$$

Rate 1/3 convolutional coding, is applied to the sequence of bits $x_{1,1}$, $x_{1,2}$, ..., $x_{1,8}$. This gives a sequence of bits $z_{1,1}$, $z_{1,2}$, ..., $z_{1,48}$. Further, rate 1/3 convolutional coding, is applied to the sequence of bits $y_1$, $y_2$, ..., $y_{29}$. This gives a sequence of bits $z_{2,1}$, $z_{2,2}$, ..., $z_{2,111}$.

Note that the coded sequence lengths result from the termination of K=9 convolutional coding being fully applied.

The rate matched bits $r_{1,1}$, $r_{1,2}$...$r_{1,40}$ shall be masked in an UE specific way using the UE identity $x_{ue,1}$, $x_{ue,2}$, ..., $x_{ue,16}$, to produce the bits $s_{1,1}$, $s_{1,2}$...$s_{1,40}$.

Intermediate code word bits $b_i$, i=1,2...,48, are defined by encoding the UE identity bits using the rate ½ convolutional coding. Eight bits out of the resulting 48 convolutionally encoded bits are punctured using the rate matching, that is, the intermediate code word bits $b_1$, $b_2$, $b_4$, $b_8$, $b_{42}$, $b_{45}$, $b_{47}$, $b_{48}$, are punctured to obtain the 40 bit UE specific scrambling sequence $c_1$, $c_2$, ....$c_{40}$.

The mask output bits $s_{1,1}$, $s_{1,2}$...$s_{1,40}$ are calculated as follows:

$$s_{1,k}=(r_{1,k} + c_k) \, mod \, 2 \qquad for \, k = 1,2...40$$

Since the control channels are shared channels they can be received by many UEs in a cell. The UEs that are assigned to monitor up to four control channels, will decode the information and check whether in their UE ID is used in e.g. a UE specific CRC field contained in the control channel information. If the CRC is correct it is assumed that the control channel has been transmitted for this UE and the transmission data on the shared data channel are directed to this particular UE. The UE will read the signaling data and receive the shared data channel on which data is being transmitted for the UE.

The control channel for example is protected by a 16 bit CRC field. This means there is approximately a likelihood of $2^{-16}$ for an illegitimate decoding attempt by a receiver. If no precautions are taken it could happen that a UE illegitimately receives the transmission data by successfully receiving and decoding the control channel information. Due to the UE specific masking of $R_1$ the code allocation and the modulation format (8 bit in all) will usually be corrupted (likelihood of $2^{-8}$) if received by a receiver with a wrong UE ID. Nevertheless it can happen the code allocation and modulation format are by chance received correctly and then the receiver is able to receive and decode the shared data channel. This may not seem to be critical since the correct receiver will receive the data independently from the second wrong receiver. Although a error rate is marginal, this can cause serious malfunction if the decoded MAC-hs SDUs are unintentionally delivered to higher layer and are mixed up with other correct data flows. Also when considering the high number of UEs in a communication network and the many decoding attempts employing CRC checks, it becomes more likely that a UE illegitimately successfully receives information on the shared data channel. Passing these information to a higher processing layer, such as applications can cause serious malfunctions in the UE (receiver).

In state of the art system such error behavior is usually excluded not only having a UE identifier in the resource assignment message but to have a second UE identifier on the data channel. For instance the 16 bit UE ID could be included in-band in the packet header e.g. in the MAC-hs header on the shared data channel's data packets or in the header of higher layer protocols. This will result in a doubled protection on control channel as well as on the shared data channel. In other words, any extra data overhead will reduce bandwidth efficiency on the shared data channels. Another option would be to add overhead on the signaling channel (e.g. lower coding rate, larger CRC, UE ID) to exclude such misinterpretation completely. Any further error protection in terms of additional bits assigned to headers as overhead information on the shared data channels will increase the data rate of the these channels which is not acceptable from radio efficiency point of view. The codes that need to be reserved for the signaling purpose should have a low spreading factor since they are just used during the an allocation message. In any of the state of the art solution additional overhead for the UE ID would be transmitted every transmission time interval although the error behavior is almost a marginal error case. Further if the UE ID is transmitted on the shared signaling or data channel, there is an increased receiver complexity because the receiver has to extract the identifier and has to compare it with the known identifier.

It is therefore the object of the present invention to provide methods for data transmission and reception to ensure secure data delivery to one or more legitimate receivers. It is a further object of the present invention to prevent non legitimate receivers from correct reception. It is still a further object of the present invention to provide respective transmitters and receivers as well as a communication system employing at least one of the transmitters and receivers.

The present invention is based on the idea that by introducing a receiver specific identifier in the data manipulation of the coding chain of the shared data channels (HS-DSCH), by means of verifying data integrity information (CRC check) of the transmitted shared channel's in the decoding chain at the receiver, a receiver can be bared from passing illegitimately received data to a further processing layer in the receiver. Thus, even in case the receiver, e.g. by accident, correctly decodes an allocation message from the control channel informing it to receive transmission data on the shared data channel though it is not intended to receive this HS-DSCH-information, the verification of the received transmission data in the decoding chain at the receiver will fail, as the illegitimate receiver will not use the same receiver specific identifier in the decoding chain of the shared data channel as the transmitter used in its coding chain for the shared data channel. As the receiver specific identifier becomes an integral part of the coding and decoding chain in the transmitter and the receiver there is no need to add overhead information to packet headers, thus that bandwidth efficiency is maintained and data security is established.

The present invention provides a method for transmitting data from a transmitter to a receiver of a communication system using a control channel and shared data channel for data transmission, wherein transmission data to be transmitted via the shared data channel are modified in accordance with a receiver-specific identifier. Next a transmitter signals to a receiver via the control channel to receive the modified transmission data.

The transmitter transmits said modified transmission data over the shared data channel. The modification of transmission data refers to the coding chain of the transmitter, in which the transmitter prepares transmission data for transmission over physical shared data channels.

The coding chain provides several steps in which the receiver specific identifier may be used to modify the transmission data. The receiver specific identifier is preferably the user equipment identifier (UE ID).

It is further preferred that the receiver-specific identifier is used in a data scrambling step in the coding chain to enable secure data communication. The transmitter may therefore comprises scrambling means that employ a scrambling function to scramble the transmission data, wherein said scrambling function is initialized with the receiver specific identifier. In order to execute the scrambling function, a transmitter may employ a shift register and/or uses a digital signal processor for executing shift operation to scramble the transmission data.

Another possibility to modify the transmission data in a transmitter in accordance with the receiver specific identifier is to generate an error checking sequence for the transmission data, wherein said error checking sequence is masked with the receiver specific identifier. Thus, in case an illegitimate receiver would employ the wrong receiver specific identifier to unmask said error checking sequence causes the data integrity check to fail.

Another step in which the transmitter may include the receiver specific identifier in the coding chain is the segmenting of transmission data into data blocks. The size of the data blocks and/or the number of data blocks when segmenting the transmission data can be determined in accordance with the receiver specific identifier. Again, the verification of the data integrity of the received transmission data in an illegitimate receiver would fail if the receiver

**EP 1 432 261 A1**

would employ the wrong receiver specific identifier to combine the data blocks.

Another further possibility to include the receiver specific identifier in the coding chain is the step of channel coding. The channel coder performs channel coding of the transmission data and comprises an interleaver which interleaves the transmission data in the coder using an interleaving pattern which is determined in accordance with the receiver specific identifier. The interleaver in the channel coder may comprise storage means for storing a plurality of interleaving patterns, which are selected in accordance with said receiver specific identifier and/or uses a digital signal processor for determining said interleaving pattern in accordance with the receiver specific identifier. Again, data verification would fail in case a receiver illegitimately receives data on the shared data channel.

Another possibility to include the receiver specific identifier in the coding chain of the transmitter is the step of rate adaptation, which matches the data rate of the transmission data to the channel capacity, that is the maximum bit rate of the transmission channels (shared data channels). Matching is done by either by puncturing the transmission data to reduce the transmission data rate using a puncturing pattern, which is selected in accordance with that receiver-specific identifier or by repeating some of the transmission data or by adding dummy information to the transmission data to increase the transmission data rate, wherein the repeated and/or dummy information is added at positions within the transmission data, which are determined in accordance with the receiver specific identifier. For performing rate adaptation (rate matching), data modification means of the transmitter comprises rate adaptation means for matching the data rate of the transmission data to the channel capacity. The rate adaptation means comprises storing means for storing a plurality of puncturing patterns, which are selected in accordance with the receiver specific identifier and/or uses a digital signal processor for determining said puncturing pattern in accordance with the receiver specific identifier.

Moreover, during the generation of redundancy versions of transmission data in the coding chain of the transmitter the receiver specific identifier can be employed. In case of employing hybrid ARQ schemes in the transmitter data, the redundancy version of the transmission data are generated using a puncturing pattern, which is determined in accordance with the receiver specific identifier.

Further, the receiver specific identifier can be employed in an interleaving step of the data modification scheme (coding chain) in the transmitter. In the step of interleaving interleaving patterns are used in accordance with the receiver specific identifier, wherein the interleaving pattern determines the positioning of data blocks within the transmission data in the interleaving step.

Moreover, the receiver specific identifier may also be used when rearranging a symbol constellation of demodulation schemes. In this step in the coding chain, the symbol constellation data bits of the transmission data are mapped to modulation symbols, wherein the mapping is determined in accordance with the receiver specific identifier.

Finally, a further possibility to employ receiver specific identifier in the coding chain is the mapping of transmission data to physical channels. In this step of mapping transmission data to physical channels, data blocks of that transmission data are matched to physical channels, wherein the sequence in which the data blocks are mapped on the physical channels is determined in accordance with said receiver-specific identifier. Depending on the access scheme the physical channels will correspond to one or more codes, frequencies or time slots or any combination.

In all the data modification steps in the coding chain of the transmitter described above a receiver has to employ the same receiver specific identifier in the decoding chain to successfully reconstruct the transmission data. In case a receiver employs the wrong receiver specific identifier that is an identifier different from that used in the transmitter in the coding chain, the verification of the data integrity in a CRC check during data reconstruction will fail. Thus, the received data is not passed to a higher processing layer and data security is established.

For receiving and recombining the modified data at the receiving end, the present invention provides a receiver for monitoring said control channel for an indication to receive transmission data which have been modified at the transmitter in accordance with a receiver specific identifier. Further, a receiver comprises receiving means for receiving the modified transmission data on the shared data channel. Moreover, the receiver comprises data reconstruction means for reconstructing said transmission data from said modified transmission data in accordance with the receiver's specific identifier.

It is important that the receiver verifies the integrity of the transmission data using an error checking sequence using verification means comprised in the data reconstruction means. As explained before, reconstructing transmission data will fail in case the receiver does not use the same receiver specific identifier in the decoding chain as used by a transmitter in its coding chain. Also the step of checking data integrity can be employed to insure that no illegitimate receiver successfully receives and decode data from the shared data channel by masking the error checking sequence with the receiver specific identifier.

In case the receiver specific identifier has been used in a scrambling process at the transmitter, the receiver's data reconstruction means employs de-scrambling means for de-scrambling the modified transmission data.

The de-scrambling means may employ a de-scrambling function to de-scramble the modified transmission data, wherein said de-scrambling function is initialized with the receiver specific identifier for the de-scrambling process, the de-scrambling means may comprise a shift register and/or uses a digital signal processor for executing shift operations to de-scramble the modified transmission data.

In order to undo the step of segmenting in the transmitter, the step of reconstructing the transmission data in the receiver concatenates the modified transmission data segments into a data block. In this step, the size of segmented modified transmission data blocks and/or the number of modified transmission data segments is determined in accordance with the receiver's specific identifier.

Further, the data reconstruction means may comprise a channel decoder for channel decoding the transmission data. The channel decoder may further comprise a de-interleaver for the interleaving set modified transmission data. The step of channel decoding performs the steps of channel decoding the modified transmission data and de-interleaving said modified transmission data in the decoder using a de-interleaving pattern determined in accordance with the receiver specific identifier.

The receiver may further perform the step of combining the transmission data from redundancy versions of the received modified transmission data. This step is necessary in case the transmitter generated redundancy versions of the transmission signals. The step of combining said transmission data combines redundancy versions of said modified transmission data, wherein said redundancy versions are de-punctured using a puncturing pattern being selected in accordance with the receiver specific identifier.

The step of reconstructing the transmission data may further comprise matching the data rate of the modified transmission data to a data rate of the transmission data prior to modification at the transmitter. The step is necessary to redo the rate matching in the transmitter to obtain the original transmission data in their original data rate. At the receiver, the step of matching the data rate depuncture the transmission data using a puncturing pattern selected in accordance with the receiver specific identifier. This step is necessary in case the receiver puncture the transmission data to reduce the data rate. In case the transmitter increase the data rate of the transmission data during the modification, the receiver removes repeated information and/or dummy information from the modified transmission data, wherein said repeated and/or dummy information is removed from positions within the modified transmission data, which are determined in accordance with the receiver specific identifier.

The data reconstruction means comprise rate matching means for matching the data rate of the modified transmission data to a data rate of a transmission data prior to modification, wherein the data rate adaptation means comprise this storing means for storing a plurality of puncturing patterns and/or uses a digital signal processor for determining said puncturing pattern in accordance with the receiver specific identifier.

In case the transmitter employed an interleaver for interleaving the transmission data during the modification process, the receiver will execute de-interleaving the modified transmission data as a step of reconstructing the transmission data. In order to execute the interleaving of the modified transmission data, the data reconstruction means comprises a de-interleaver. The de-interleaver may comprise a storage means for storing a plurality of de-interleaving patterns and/or uses a digital signal processor for determining said de-interleaving pattern in accordance with the receiver specific identifier. The step of de-interleaving uses a de-interleaving pattern determined in accordance with the receiver specific identifier, wherein the de-interleaving pattern determines the positioning of data blocks within the modified transmission data.

To reverse the step of de-mapping the transmission data to physical channels in the transmitter, the receiver performs the step of combining the modified transmission data segments received via physical channel to a serial data stream, wherein the sequence in which the data segments are combined to form the serial data stream is determined in accordance with the receiver specific identifier. In order to redo the rearrangement of the symbol constellation in the transmitter, the receiver performs the step of de-mapping the symbols of the received modified transmission data into information bits employing a demapping pattern determined in accordance with the receiver specific identifier during the reconstruction of transmission data.

As for the encoding chain of the transmitter, it is important to recognize that for the decoding chain, the same receiver specific identifier, such as a user-equipment identifier, has to be used to successfully reconstruct the original transmission data that have been modified by the transmitter in its encoding chain. As the receiver specific identifier may be used in one or several of the mentioned steps in the encoding chain, for example, in the steps of scrambling, generating an error checking sequence, segmenting, channel coding, rate matching, interleaving, etc., the receiver has to use the same receiver specific identifier in the respective steps in the decoding chain, for example, in the steps of de-scrambling, verifying the data integrity, combining the data segments, channel decoding, rate-matching, de-interleaving, etc., in order to successfully reconstruct the transmission data. In case that in any step the wrong receiver specific identifier is used in the decoding chain of the receiver, the data integrity will not be verified. Therefore, in the latter case, the illegitimately received transmission data will not be passed to a higher processing level in the receiver, such prevent failures and malfunctions in the receiver.

The described method steps of the transmitter and the receiver may also be employed in a method for transmitting and receiving data in a communication system. Further, the transmitter and receiver described above may be employed in a communication system comprising at least one transmitter and at least one receiver.

In the following the present invention is described in more detail in reference to the attached figures and drawings showing preferred embodiments of the invention. Similar or corresponding details in the figure are marked with the same reference numerals.

**Figure 1**    shows an exemplary encoding chain of a transmitter according to the present invention employing a receiver specific identifier,

**Figure 2**    shows an exemplary decoding chain of a receiver according to the present invention, employing the receiver specific identifier,

**Figure 3**    shows a MAC-hs PDU together with its CRC attachment,

**Figure 4**    shows the segmentation of the MAC-hs PDU and its CRC attachment of figure 3 according to the prior art,

**Figure 5**    shows the segmentation of the MAC-hs PDU and its CRC attachment of Figure 3 according to the present invention,

**Figure 6**    shows the desired size for a MAC-hs PDU after a rate matching process,

**Figure 7**    shows how the data rate of a MAC-hs PDU is increased by adding dummy information,

**Figure 8**    shows how the data rate of a MAC-hs PDU is increased by repeating parts of the MAC-hs PDU's data,

**Figure 9**    shows how the data rate of a MAC-hs PDU is decreased by puncturing,

**Figure 10**    shows an exemplary symbol constellation of a 16 QAM modulation scheme,

**Figure 11**    shows a rearrangement of the symbol constellation of a 16 QAM modulation scheme of Figure 10,

**Figure 12**    shows the mapping of transmission data to a plurality of physical channels,

**Figure 13**    shows the transmission of the receiver specific identifier from the radio network controller (RNC) to a user equipment (UE),

**Figure 14**    shows a timely message flow on a shared control channel (HS-SCCH) and on a shared data channel (HS-DSCH),

**Figure 15**    shows a concatenation of MAC-hs SDU forming a data packet on the physical layer PHY,

**Figure 16**    shows the coding gain for control data on the shared control channel and

**Figure 17**    shows a turbo-coder according to the UMTS Specifications Release 5.

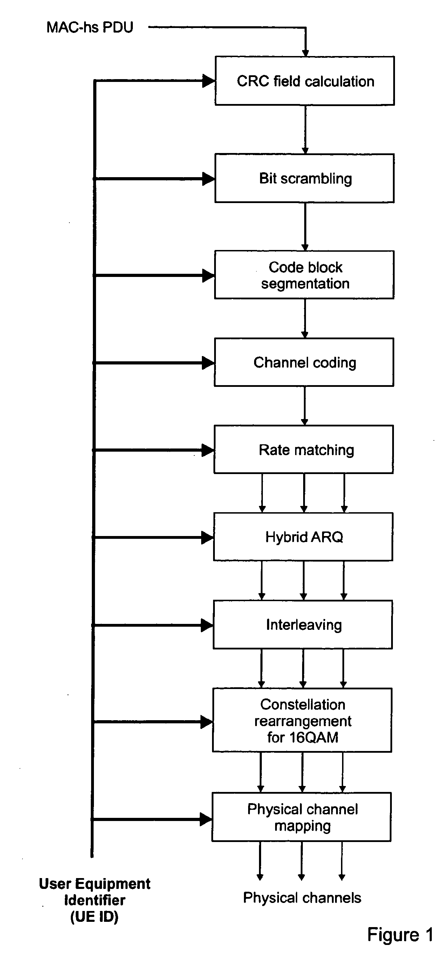

In reference to Figures 1 to 12 the inventive modification of the transmission data in the encoding chain of a transmitter and the respective adaptions of the receiver's decoding chain will be discussed.

Figure 1 shows an example of an encoding chain of a shared data channel. The encoding chain may comprise the following steps: calculating a cyclic redundancy check field in accordance with the receiver specific identifier to ensure data integrity at the receiver, bit scrambling of the transmssion data in accordance with the receiver specific identifier, block segmenting the transmission data in accordance with the receiver specific identifier, channel coding the transmission data in accordance with the receiver specific identifier, rate matching of the transmission data in accordance with the receiver specific identifier, Hybrid-ARQ functionality producing redundancy versions of the transmission data in accordance with the receiver specific identifier, an interleaving step of the transmission data in accordance with the receiver specific identifier, constellation rearrangement of the modulation scheme (e.g. 16QAM) in accordance with the receiver specific identifier and mapping the transmission data to physical channels in accordance with the receiver specific identifier. Depending on the radio access technology different functions of the encoding chain may already exist while not making use of a receiver specific parameter. For a simple realisation of the unveiled invention it would be preferable to reuse an existing function. Furthermore a single bit which is processed differently in transmitter and receiver will cause a cyclic redundancy check (data integrity check) to fail. This will have a neglectible impact on the decoding performance of the legitimate receiver applying the correct decoding.

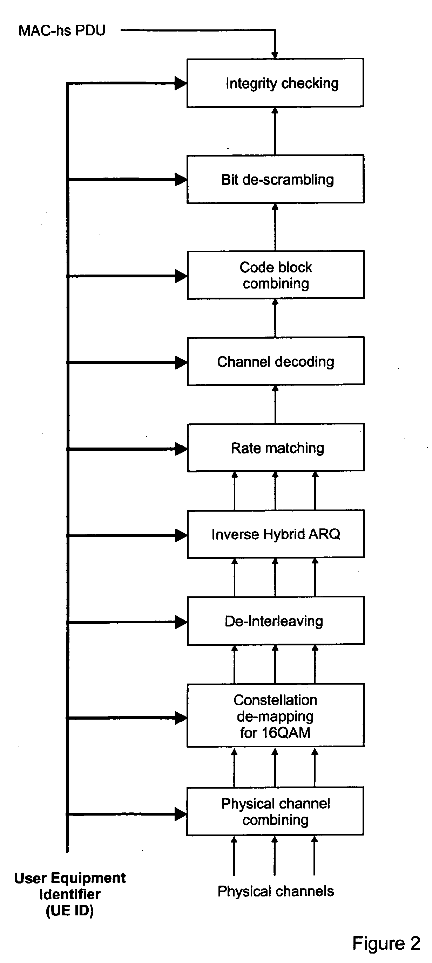

Figure 2 shows the decoding chain in a receiever (UE) and comprises the the respective cmplemantary steps to the encoding chain in the transmitter. The decoding chain may comprises the following steps (from bottom to the top): combining the modified transmission data sagments on the physical channels to form transmission data in accordance with the receiver specific identifier, de-mapping the transmission symbols using a symbol constellation determined in accordance with the receiver specific identifier, de-interleaving the transmission data in accordance with the receiver specific identifier, combining different redundancy versions of transmission data in the functional block "Inverse Hybrid ARQ" in accordance with the receiver specific identifier, rate matching to obtain the original data rate of the transmission data, channel decoding, concatenating the different transmission data segments of the transmission data, de-scrambling the modified transmission data stream and integritiy checking the transmission data reconstructed from the received data modified using the transmsitter's coding chain.

Each PDU or concatenation of PDUs is protected by a CRC code which facilitates error detection. The calculation of the CRC field in accordance with the receiver specific identifier corresponds to the respective functional block in Figure 1.

To obtain the CRC attachment according to the present invention, the CRC field bits $p_1$, $p_2$, ..., $p_{16}$ for the MAC-hs PDU (transmission data) are calculated first. The entire transmission data block is used to calculate the CRC parity bits for each transmission data block. The parity bits are generated by one of the following cyclic generator polynomials:

- $g_{CRC24}(D) = D^{24} + D^{23} + D^6 + D^5 + D + 1$;

- $g_{CRC16}(D) = D^{16} + D^{12} + D^5 + 1$;

- $g_{CRC12}(D) = D^{12} + D^{11} + D^3 + D^2 + D + 1$;

- $g_{CRC8}(D) = D^8 + D^7 + D^4 + D^3 + D + 1$.

Denote the bits in a transport block delivered to the physical layer PHY by $a_{im1}, a_{im2}, a_{im3}, ..., a_{imA_i}$, and the parity bits by $p_{im1}, p_{im2}, p_{im3}, ..., p_{imL_i}$. $A_i$ is the size of a transmission data block $i$, $m$ is the transport block number, and $L_i$ is the number of parity bits. $L_i$ can take the values 24, 16, 12, 8, or 0 depending on what is signaled from higher layers.

The encoding is performed in a systematic form, which means that in GF(2), the polynomial:

$$a_{im1}D^{A_i+23} + a_{im2}D^{A_i+22} + ... + a_{imA_i}D^{24} + p_{im1}D^{23} + p_{im2}D^{22} + ... + p_{im23}D^1 + p_{im24}$$

yields a remainder equal to 0 when divided by $g_{CRC24}(D)$, polynomial:

$$a_{im1}D^{A_i+15} + a_{im2}D^{A_i+14} + ... + a_{imA_i}D^{16} + p_{im1}D^{15} + p_{im2}D^{14} + ... + p_{im15}D^1 + p_{im16}$$

yields a remainder equal to 0 when divided by $g_{CRC16}(D)$, polynomial:

$$a_{im1}D^{A_i+11} + a_{im2}D^{A_i+10} + ... + a_{imA_i}D^{12} + p_{im1}D^{11} + p_{im2}D^{10} + ... + p_{im11}D^1 + p_{im12}$$

yields a remainder equal to 0 when divided by $g_{CRC12}(D)$ and polynomial:

$$a_{im1}D^{A_i+7} + a_{im2}D^{A_i+6} + ... + a_{imA_i}D^8 + p_{im1}D^7 + p_{im2}D^6 + ... + p_{im7}D^1 + p_{im8}$$

yields a remainder equal to 0 when divided by $g_{CRC8}(D)$.

This sequence of parity bits is then masked with the UE ID $x_{ue,1}$, $x_{ue,2}$, ..., $x_{ue,16}$ to form the masked sequence of bits $m_1$, $m_2$, ..., $m_{16}$, i.e. CRC attachment in accordance with the receiver specific identifier, which is e.g. determined by

$$m_i = (p_i + x_{ue,i}) \ mod \ 2 \qquad i=1,2,...16.$$

Further receiver specific bit scrambling employing the receiver specific identifier such as the UE ID may additionally or alternatively be implemented (see "Bit scrambling" in Figure 1). The realisation of this function can for instance be obtained by manipulating the initial value of the bit scrambling function.

A scrambling function that may be used to scramble the transmission data in accordance with the receiver specific identifier in a bit scrambler is illustratively presented in the following. The bits input to the bit scrambler are denoted by $b_{im,1}, b_{im,2}, b_{im,3}, ..., b_{im,B}$, where B is the number of bits input to the HS-DSCH bit scrambler. The bits after bit scrambling are denoted $d_{im,1}, d_{im,2}, d_{im,3}, ..., d_{im,B}$.

Bit scrambling is defined by the following relation:

$$d_{im,k} = (b_{im,k} + y_k) \bmod 2 \qquad k = 1,2,...,B$$

and $y_k$ results from the following operation:

$$y'_m = x_{ue,-m+1} \qquad -16 < m < 1$$

$$y'_m = 1 \qquad m = 1$$

$$y'_m = \left( \sum_{i=1}^{16} g_i \cdot y'_{m-i} \right) \bmod 2 \qquad\qquad 1 < m < B,$$

where g = {0,0,0,0,0,0,0,0,0,0,1,0,1,1,0,1},

$$y_k = y'_k \qquad k = 1,2,...,B.$$

In the bit scrambling function described above transmission data modification is done in accordance with the receiver specific identifier e.g. $y'_m$ (m=-15 to 0) is initialized by the 16 bit long receiver specific UE ID $x_{ue,1}$, $x_{ue,2}$, ..., $x_{ue,16}$. If a scrambling function is anyway needed for other purposes, this specific realization is the simplest possibility to include the receiver specific identifier in the scrambling process in the receiver in order to provide data security for transmission data on the shared data channel imlying only minimal changes for transmitter and receiver.

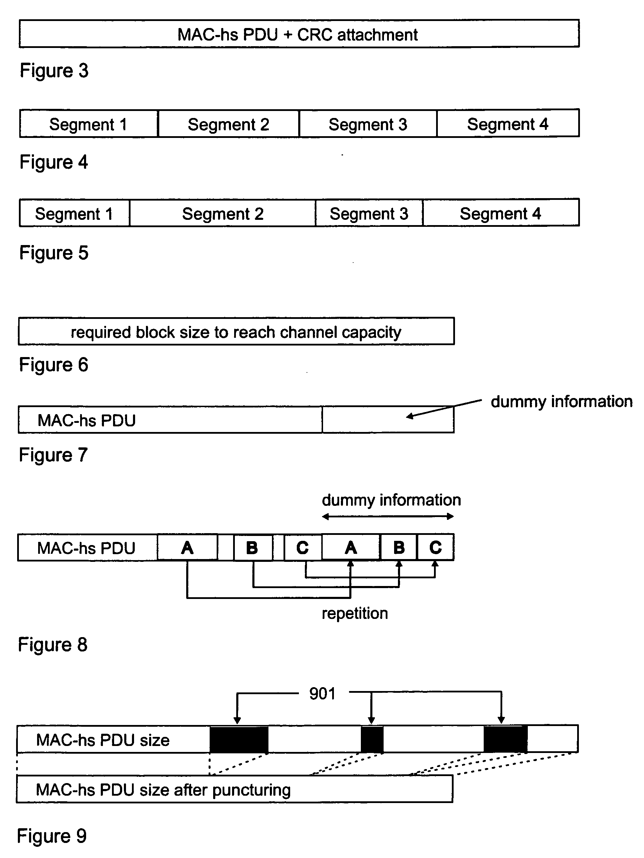

In reference to Figures 3, 4 and 5 the code block segmentation step illustrated in Figure 1 will be described in more detail. Figure 3 illustrates a MAC-hs PDU and its CRC attachment forming a transmission data block of size S. As shown in Figure 1, this data block is inputted to the channel coder. The channel coder is commonly designed to code transmission data blocks up to a maximum size of $S_{max}$ in each coding step. Hence, if $S > S_{max}$ the transmission data block has to be segmented into several data block segments. This is commonly done by deviding the MAC-hs PDU and its CRC attachment in several equally sized data segments as illustrated in Figure 4 where the MAC-hs PDU and its CRC attachment is segmented into four equally sized data blocks (segments 1, 2, 3 and 4). Figure 4 illustrates a code block segmentation technique according to the present invention. In this segmentation technique the size of data segments and/or the number of data segments into which the transmission data block is devided is determined in accordance with the receiver specific identifier. For example, depending on the bit values of the receiver specific identifier i.e. the UE ID $x_{ue}$ employing logical operations as AND, OR, XOR or the like, the size and number of segments into which the transmission data are segmented may be calculated.

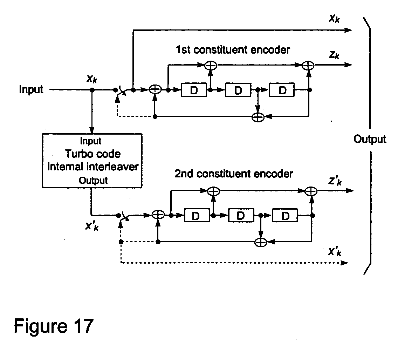

A further possibility to use the receiver specific identifier in the coding chain in the transmitter is the channel coder. The turbo-coder suggested by the UMTS Specifications Release 5 shown in Figure 17, comprises two coding means (1st and 2nd constituent encoder) that code two versions of the transmission data $x_k$ and $x'_k$. While the first version $x_k$ is coded directly, the second version $x'_k$ of the transmission data is first passed through a turbo code interleaver which intereleaves the copy of the tranmission data $x'_k$ before channel coding same. The interleaver in the channel coder may be modified as described in reference to the interleaving step of the coding chain in the transmitter further down below.

In the step of rate matching, depicted in Figure 1, the transmission data rate has to be matched to the maximum bit rate of the channel, i.e. the channel capacity. As depicted in Figures 6 to 9 rate matching may either increase (see Figure 7 and 8) or decrease (see Figure 9) the transmission data rate.

In a case where the transmission data rate is lower than the transmissions channel capacity, some data information is repeated and/or dummy information are added to the transmission data (i.e. MAC-hs PDU including a CRC field) to increase the data rate such that it matches the desired channel data rate and hence the channel capacity. The repeated data and/or the dummy information may be simply added at the end of the transmission data block Figure 6 or may be distributed to different locations in the transmission data. Figure 7 shows how dummy information are added to the end of the MAC-hs PDU in order to increase the transmission data rate. In Figure 8 the data blocks A, B and C from the MAC-hs PDU are repeated at the end of the MAC-hs PDU. It is also possible to combine the steps shown in Figures 7 and 8, such that dummy information and repeated information are used to increase the MAC-hs PDU's size for matching the channel capacity. The distribution and the selection of the bit values of the repeated and/ or dummy data may be determined in accordance with the receiver specific identifier. For example the receiver specific identifier may be used to calculate the locations at which the repeated and/or dummy data are inserted using a DSP. The receiver would then have to use the same receiver specific identifier in order to determine the exact positions at which the transmitter repeated the information and/or added the dummy information to the transmission data in order to successfully "undo" the rate matching process at the receiver. Another posibility would be to mask the dummy information using the receiver specific identifier or to employ the identifier to determine a unique bit pattern which is inserted into the transmission data which can be identified as dummy information by the receiver.

The second possible case in the rate matching process is to reduce the transmission data rate. This is done by puncturing a transmission data stream using a puncturing pattern that is determined in accordance with the receiver specific identifier. In Figure 9 the blocks 901 are punctured from the original transmission data. The resulting modified transmission data are depicted in Figure 9. Different puncturing patterns selected in accordance with that receiver specific identifier may be stored in a storing means such as a memory. Since extra storage capacity increases complexity and costs a better solution is to determine, e.g. calculate the receiver specific identifier using a digital signal processor (DSP) in the UE. This DSP is a common component in a UE and may be used for computing a value from the UE ID that is then used to select one puncturing pattern. As data are "punctured", i.e. removed at the predetermined positions from the transmission data, diversity schemes are usually employed for transmission in order to be able to reconstruct the original transmission data from multiple copies of the transmission data punctured by the tranmsitter using different puncturing patterns prior to transmission. The receiving end (UE) of the rate-matched transmission data has to perform rate matching as well to reconstruct the transmission data from the multiple copies of the tranmsission data punctured with different puncturing patterns selected in accordance with the receiver specific identifier at the transmitter. Differently punctured copies of the transmission data are used for Hybrid ARQ Type II/III techniques where different redundancy versions are generated as will be described below. In the illustration in Figure 1 the multiple redundacy versions correspond to the multiple connections between the Rate Matching and the Hybrid ARQ entities. If a simple Hybrid ARQ Type I technique is used there usually will be only a single redundancy version used for initial and subsequent transmissions. Only when employing the same receiver specific identifier at the receiver to determine the puncturing pattern used by the transmitter the transmission data can be successfully, i.e. without causing the CRC check to fail, reconstructed at the UE.

Interleaving, as also illustrated as a functional block in Figure 1, is used to change the order of the information bits and to reduce the likelihood that adjacent bits are erroneous causing an error burst. This increases the reliability and is usually applied in mobile communication systems to mitigate channel fading. There are usually many different interleaving patterns with very similar perfomance. The perfomance of each interleaving pattern may be different depending on the mobile channel. In the deviation of the invention is it proposed to apply a different interleaver pattern for each user. Different interleaving patterns that are selected in accordance with that receiver specific identifier may be stored in a storing means such as a memory. However, this increases complexity and costs as more storing capacity is needed in a UE to store multiple different interleaving patterns. A better solution to use different interleaving pattern which are selected for the interleaving process in dependence of the receiver specific identifier is to determine, e.g. calculate them using a digital signal processor (DSP) in the UE. This DSP is a common component in a UE and may be used for computing a value from the UE ID that is then used to select one of the interleaving patterns. Alternatively an extra DSP for performing the computation of interleaving pattern may be built into the UE. Using an interleaver in accordance with the receiver specific identifier would require that the receiver considers this data modification step in the decoding chain by employing its own UE ID (receiver specific identifier) to determine the interleaving pattern used by the transmitter. If both identifiers, the one used at the transmitter and the one used at the receiver match, i.e. the receiver is intended to receive the data on the shared data channel, the receiver will be able to successfully de-interlave the received modified transmission data.

The receiver specific identifier could also be used when producing redundancy versions of the transmission data when employing an ARQ scheme in the transmission system. In Figure 1 the functional block "Hybrid ARQ" depicts such functionality. From the transmission data several copies for selective retransmission are produced. Then, these copies are usually punctured as described in reference to the rate matching process when reducing the transmission data rate described above. As in the step of rate matching in the encoding chain, the receiver specific identifier is used to generate or select different puncturing patterns used when generating the redundancy versions of the transmission data. As for the rate matching step, the receiver has to employ the same receiver specific identifier to determine the appropriate puncturing patterns for data reconstruction in the receiver. Otherwise it won't be able to correctly reconstruct the original transmission data, as the CRC check of the decoding chain would fail.

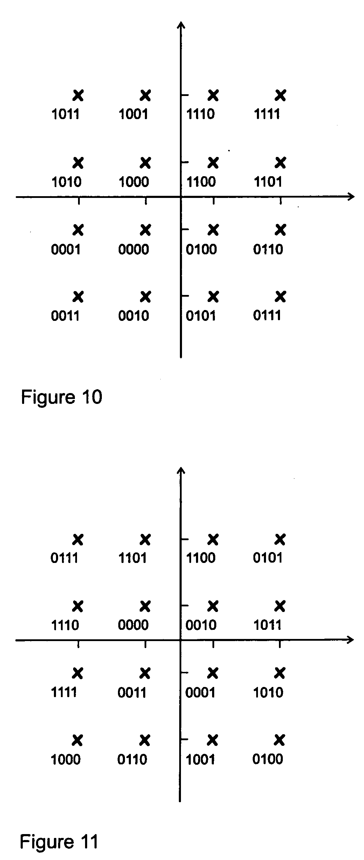

In reference to Figures 10 and 11 the constellation rearrangement of the modulation scheme in accordance with the receiver specific identifier is explained. Constellation rearrangement in a transmitter is usually done when employing higher order modulation schemes to average out the different decoding likelihoods of the bit at different position of the symbol. Hence, the constellation rearrangement section in a transmitter maps transmission data blocks ($\log_2 N$ bits are mapped to a symbol, wherein N is the number of symbols in the modulation scheme) to modulation symbols, such that symbols of all possible amplitude levels are transmitted with at best equal probability.

A standard mapping for 16QAM mapping data blocks with a size 4 bits to a modulation scheme is depicted in Figure 10. According to the present invention it is proposed to use the receiver specific identifier in the calculation of the constellation rearrangement in the transmitter. Figure 11 shows an exemplary constellation rearrangment of a 16QAM modulation. The receiver of transmission signals modified using constellation rearrangement in accordance with a receiver specific identifier would have to use the same receiver specific identifier to determine symbol constellation used by the transmitter for demapping the symbols received to their respective bit representation as transmisstion data. In case a wrong symbol constellation is used, the bit stream of the transmission data is corrupted and the CRC will fail.

Physical channel mapping of the transmission data, as shown in the last functional block in Figure 1, maps the transmission data to different physical channels, as examplary shown in Figure 12, in case the data rate of the transport channels in the upper layer (e.g. MAC layer) is higher then the data rate on the physical channels carrying the encoded transmission data. Thus, in those cases it is possible to use the receiver specific identifier to determine the order in which individual transmission data segments are distributed, i.e. mapped to the available physical channels. In Figure 12, the transmission data have to be mapped to four different physical channels with channelization codes C1, C2, C3 and C4. The receiver specific identifier can e.g. be used to initialize a distribution function that determines the order in which the data segments of the transmission data are mapped to the physical channels. In the depicted example, the sequence in which the physical channels are employed will be C1, C3, C2 and then C4. The receiver will have to employ a respective demapping scheme to combine the different received data segments on the physical channels to reconstruct the transmission data. In case the wrong demapping sequence would be used by the receiver, the transmission data stream would be corrupted and therefore the CRC check would fail.

For this invention it is prefered to reuse an existing receiver specific identifier which is already known to the receiver such as a UE ID in UMTS in the data manipulation processes described in reference to Figures 1 to 12. This would avoid additional signalling to assign or to agree on the receiver specific parameters.

In another embodiment of the invention a receiver identity is signalled to the receiver. Figure 13 illustrates an exemplary communication system in which a Radio Network Controler (RNC) in the core network signals the equivalent of the UE ID on the Radio Resource Control (RRC) layer, the Radio Network Temporary Identity (HS-RNTI) via an intermediate node, NodeB, to the RRC layer of the UE. The UE extracts this unique identifier at the RRC, which will configure the lower layer, including the physical layer PHY prior reception of the data. Since the Node B transports the data of RRC signalling message without knowing the content, the RNC signals the Radio Network Temporary Identity (HS-RNTI) via the Node B application protocol (NBAP) to the Node B to perform the correct encoding. At the physical layer the HS-RNTI is called user equipment identifier (UE ID) which is one of the possible parameters that are used for the presented data manipulation of transmission data in the transmitter's encoding chain and in the receiver's decoding chain respectively.

All functions in the coding chain are carried out in the proposed modified way for shared data channel (HS-DSCH) transmissions intended for all receivers. This makes it possible for a receiver to decode the data as long as it has received an allocation massage, i.e. information transmitted to the receiver via a control channel (HS-DSCH), and knows all necessary parameter. The unveiled idea manipulates the transmission data sent on the shared data channel e.g. HS-DSCH by a receiver specific logical operation. By modifying any of the encoding functions with a receiver specific parameter it is ensured that only the addressed receiver will decode the PDU correctly and pass it to a further processing instance only in case the data integrity of the received data has been veryfied. Therefore the functionality if the method is different from including a explicit receiver identification with the data e.g. a UE ID signalled inband in a packet header. The correct receiver is not identified, but it is the only one that can decode the data correctly. This will guarantee that no illegitimate receiver and therefore only the correct receiver will successfully reconstruct the manipulated transmission data, or in other words the modified transmission data, correctly. By checking the data intergrity e.g. using a CRC check it is known to the receiver if the decoding process was correct or not.

The invention allows for a less protected allocation message, because the resulting error cases are avoided. Since the low rate shared signalling channel as the HS-SCCH needs to be minimized in the number of bits, the number of bits necessary can be reduced as well as the amount of resources required for signalling purposes. For the signalling channels resources (e.g. channelisation codes) need to be reserved although the channel may only be used temporarily for allocating resources on the data channel or for telling the receiver that data for it will be transmitted.

The present invention has been described in reference to an encoding chain as shown in Figure 1 and a decoding chain as shown in Figure 2. It is pointed out that it is sufficient to modify the transmission data in only one of the steps in the coding chain to ensure transmission data security in term of ensuring that only a legitimate receiver will successfully reconstruct the transmission data. It is also clear to the skilled person, that the encode chain and the decoding chain is only ilustrative, as coding and decoding of transmission data may vary from one communication system to another.

Although the presented invention refers to HSDPA and specific parts of the UMTS specification, the invention is not restricted to this system. Therefore the data transmission does not necessarily have to be in the downlink nor does it depend on a particular radio access scheme.

Furthermore the term receiver specific identifier used for the data manipulation which, in the presented embodiment of the invention, is called UE ID and HS-RNTI (high speed - radio network temporary identity) is not restricted to these terms or functionalities. Another realization of receiver specific identifier could for instance make use of an user identifier which is independent of the receiver but still unique and known within the network i.e. IMSI (International Mobile Station Identity) that is stored on the SIM card (Subscriber Identity Module) of the user equipment. In addition to this the specific identifier could correspond to multiple receivers. When applied for multicast transmission, where serveral receiver may receive the same content, the specific identified could correspond to a number of receivers within a multicast group. Such identifier would be assigned by the network if the user subscribes to a multicasts service or joines a certain group. Similarly as multiple receiver of the same signal are employed it would also possible that the signal is transmitted by multiple transmitter. A common example is a soft handover situation in CDMA system where in downlink the same signal is transmitted by multiple transmitter to be combined by the RAKE receiver in the mobile station or in the uplink where the signal is received by multiple receiver.

## Claims

1. A method for transmitting data from a transmitter to a receiver of a communication system using a control channel and a shared data channel for data transmission, comprising the steps of:

   modifying transmission data to be transmitted via said shared data channel in accordance with a receiver specific identifier,

   signaling to said receiver via the control channel to receive said modified transmission data and

   transmitting said modified transmission data over the shared data channel.

2. The method according to claim 1, wherein the receiver specific identifier is a user equipment identifier.

3. The method according to claim 1 or 2, wherein the step of modifying comprises scrambling the transmission data.

4. The method according to claim 3, wherein in the step of scrambling a scrambling function is employed to scramble the transmission data, wherein said scrambling function is initialized with said receiver specific identifier.

5. The method according to claim 3 or 4, wherein in the step of scrambling shift operations are employed to scramble the transmission data.

6. The method according to claim 1 to 5, wherein the step of modifying comprises generating an error checking sequence for the transmission data.

7. The method according to claim 6, wherein in the step of generating said error checking sequence said generated sequence is masked with said receiver specific identifier.

8. The method according to claim 1 to 7, wherein the step of modifying comprises segmenting the transmission data into at least two data blocks.

9. The method according to claim 8, wherein in the step of segmenting the size of data blocks and/or the number of data blocks is determined in accordance with said receiver specific identifier.

**10.** The method according to claim 1 to 9, wherein the step of modifying comprises channel coding the transmission data in accordance with said receiver specific identifier.

**11.** The method according to claim 10, wherein in the step of channel coding a coder performs the steps of:

channel-coding the transmission data and

interleaving the transmission data in the coder using an interleaving pattern determined in accordance with said receiver specific identifier.

**12.** The method according to claim 1 to 11, wherein the step of modifying comprises matching the data rate of the transmission data to the channel capacity.

**13.** The method according to claim 12, wherein the step of matching the data rate punctures the transmission data to reduce the transmission data rate using a puncturing pattern, wherein the puncturing pattern is selected in accordance with said receiver specific identifier.

**14.** The method according to claim 12, wherein the step of matching the data rate repeats data information and/or adds dummy information to the transmission data to increase the transmission data rate, wherein the information is added at positions within the transmission data which are determined in accordance with said receiver specific identifier.

**15.** The method according to claim 1 to 14, wherein the step of modifying comprises generating redundancy versions of the transmission data.

**16.** The method according to claim 15, wherein the redundancy versions are generated using a puncturing pattern determined in accordance with said receiver specific identifier.

**17.** The method according to claim 1 to 16, wherein the step of modifying comprises interleaving the transmission data.

**18.** The method according to claim 17, wherein the step of interleaving uses an interleaving pattern in accordance with said receiver specific identifier, wherein the interleaving pattern determines the repositioning of data blocks within the transmission data.

**19.** The method according to claim 1 to 18, wherein the step of modifying comprises rearranging a symbol constellation of the modulation scheme.

**20.** The method according to claim 19, wherein in the step of rearranging said symbol constellation data bits of the transmission data are mapped to modulation symbols, wherein the mapping is determined in accordance with said receiver specific identifier.

**21.** The method according to claim 1 to 20, wherein the step of modifying comprises mapping the transmission data to physical channels.

**22.** The method according to claim 21, wherein in the step of mapping the transmission data to physical channels, data blocks of said transmission data are mapped to physical channels, wherein the sequence in which the data blocks are mapped on the physical channels is determined in accordance with said receiver specific identifier.

**23.** The method according to one of claims 1 to 22, further comprising the step of signaling the receiver specific identifier for transmission data modification to the transmitter.

**24.** A method for receiving data transmitted from a transmitter to a receiver of a communication system using a control channel and a shared data channel for data transmission, comprising the steps of:

monitoring said control channel for an indication to receive transmission data which have been modified at the transmitter in accordance with a receiver specific identifier,

receiving said modified transmission data on said shared data channel and

reconstructing said transmission data from said modified transmission data in accordance with said receiver specific identifier.

25. The method according to claim 24, wherein the receiver specific identifier is a user equipment identifier.

26. The method according to claim 24 or 25, wherein the step of reconstructing comprises verifying the data integrity of the transmission data using an error checking sequence.

27. The method according to claim 26, wherein in the step of verifying the data integrity said error checking sequence is unmasked with said receiver specific identifier.

28. The method according to claim 24 to 27, wherein the step of reconstructing comprises de-scrambling the modified transmission data.

29. The method according to claim 28, wherein in the step of de-scrambling a de-scrambling function is employed to de-scramble the modified transmission data, wherein said de-scrambling function is initialized with said receiver specific identifier.

30. The method according to claim 28 or 29, wherein in the step of de-scrambling shift operations are employed to de-scramble the modified transmission data.

31. The method according to claim 24 to 30, wherein the step of reconstructing comprises concatenating modified transmission data segments into a data block.

32. The method according to claim 31, wherein in the step of concatenating the size of segmented modified transmission data blocks and/or the number of modified transmission data segments is determined in accordance with said receiver specific identifier.

33. The method according to claim 24 to 32, wherein the step of reconstructing comprises channel decoding the transmission data.

34. The method according to claim 33, wherein in the step of channel decoding a decoder performs the steps of:

   channel-decoding the modified transmission data and

   de-interleaving said modified transmission data in the decoder using a de-interleaving pattern determined in accordance with said receiver specific identifier.

35. The method according to claim 24 to 34, wherein the step of reconstructing comprises matching the data rate of the modified transmission data to a data rate of the transmission data prior to modification at the transmitter.

36. The method according to claim 35, wherein the step of matching the data rate de-punctures the transmission data using a puncturing pattern selected in accordance with said receiver specific identifier.

37. The method according to claim 35, wherein the step of matching the data rate removes repeated information and/ or dummy information from the modified transmission data, wherein said information is removed from positions within the modified transmission data which are determined in accordance with said receiver specific identifier.

38. The method according to claim 24 to 37, wherein the step of reconstructing comprises combining the transmission data from redundancy versions of the received modified transmission data.

39. The method according to claim 38, wherein said redundancy versions are de-punctured using a puncturing pattern being selected in accordance with said receiver specific identifier.

40. The method according to claim 24 to 39, wherein the step of reconstructing comprises de-interleaving the modified transmission data.

41. The method according to claim 40, wherein the step of de-interleaving uses a de-interleaving pattern determined in accordance with said receiver specific identifier, wherein the de-interleaving pattern determines the repositioning of data blocks within the modified transmission data.

42. The method according to claim 24 to 41, wherein the step of reconstructing comprises de-mapping the symbols of received modified transmission data into information bits employing a de-mapping pattern determined in accordance with said receiver specific identifier.

43. The method according to claim 24 to 42, wherein the step of reconstructing comprises combining the modified transmission data segments received via physical channels to a serial data stream, wherein the sequence in which the data segments are combined to form said serial data stream is determined in accordance with said receiver specific identifier.

44. The method according to one of claims 24 to 43, further comprising the step of signaling the receiver specific identifier for transmission data modification to the receiver.

45. A transmitter for transmitting data from a transmitter to a receiver of a communication system using a control channel and a shared data channel for data transmission, comprising:

> data modification means for modifying transmission data to be transmitted via said shared data channel in accordance with a receiver specific identifier,

> transmission means for signaling to said receiver via the control channel to receive said modified transmission data and for transmitting said modified transmission data over the shared data channel.

46. The transmitter according to claim 45, wherein the receiver specific identifier is a user equipment identifier.

47. The transmitter according to claim 45 or 46, wherein the data modification means comprises scrambling means for scrambling the transmission data, wherein scrambling means comprises a shift register and/or uses a digital signal processor for executing shift operations to scramble the transmission data.

48. The transmitter according to one of claims 45 to 47, wherein the data modification means comprises a channel-coder for channel coding the transmission data in accordance with said receiver specific identifier, wherein the channel-coder comprises an interleaver for interleaving the transmission data.

49. The transmitter according to one of claims 45 to 48, wherein the data modification means comprises an interleaver for interleaving the transmission data.

50. The transmitter according to claim 48 or 49, wherein the interleaver comprises a storage means for storing a plurality of interleaving patterns and/or uses a digital signal processor for determining said interleaving pattern in accordance with said receiver specific identifier.

51. The transmitter according to one of claims 45 to 50, wherein the data modification means comprises rate adaptation means for matching the data rate of the transmission data to the channel capacity, wherein the rate adaptation means comprise storing means for storing a plurality of puncturing patterns and/or uses a digital signal processor for determining said puncturing pattern in accordance with said receiver specific identifier.

52. A receiver for receiving data transmitted from a transmitter to a receiver of a communication system using a control channel and a shared data channel for data transmission, comprising:

> monitoring means for monitoring said control channel for an indication to receive transmission data which have been modified at the transmitter in accordance with a receiver specific identifier,

> reception means for receiving said modified transmission data on said shared data channel and

> data reconstruction means for reconstructing said transmission data from said modified transmission data in accordance with said receiver specific identifier.

53. The receiver according to claim 52, wherein the receiver specific identifier is a user equipment identifier.

**54.** The receiver according to claim 52 or 53, wherein the data reconstruction means comprises verification means for verifying the data integrity of the transmission data using an error checking sequence and for unmasking said error checking sequence with said receiver specific identifier.

**55.** The receiver according to one of claims 52 to 54, wherein the data reconstruction means comprises de-scrambling means for de-scrambling the modified transmission data, wherein the de-scrambling means comprises a shift register and/or uses a digital signal processor for executing shift operations to de-scramble the modified transmission data.

**56.** The receiver according to one of claims 52 to 55, wherein the data reconstruction means comprises a channel decoder for channel decoding the transmission data, wherein the channel decoder comprises a de-interleaver for de-interleaving said modified transmission data.

**57.** The receiver according to one of claims 52 to 56, wherein the data reconstruction means comprises a de-interleaver for de-interleaving the modified transmission data.

**58.** The receiver according to claim 56 or 57, wherein the de-interleaver comprises a storage means for storing a plurality of de-interleaving patterns and/or uses a digital signal processor for determining said de-interleaving pattern in accordance with said receiver specific identifier.

**59.** The receiver according to one of claims 52 to 58, wherein the data reconstruction means comprises rate matching means for matching the data rate of the modified transmission data to a data rate of the transmission data prior to modification, wherein the rate adaptation means comprises storing means for storing a plurality of puncturing patterns and/or uses a digital signal processor for determining said puncturing pattern in accordance with said receiver specific identifier.

**60.** A method for transmitting and receiving data in a communication system comprising the steps of one of claims 1 to 23 and the steps one of claims 24 to 44.

**61.** A communication system comprising at least one transmitter according to one of claims claim 45 to 51 and at least one receiver according to one of claims 52 to 59.

**62.** The communication system according to claim 61, further comprising a radio network controller for signaling a receiver specific identifier to said at least one receiver.

MAC-hs PDU

CRC field calculation

Bit scrambling

Code block segmentation

Channel coding

Rate matching

Hybrid ARQ

Interleaving

Constellation rearrangement for 16QAM

Physical channel mapping

User Equipment Identifier (UE ID)

Physical channels

Figure 1

MAC-hs PDU

Figure 2

| MAC-hs PDU + CRC attachment |
|---|

Figure 3

| Segment 1 | Segment 2 | Segment 3 | Segment 4 |
|---|---|---|---|

Figure 4

| Segment 1 | Segment 2 | Segment 3 | Segment 4 |
|---|---|---|---|

Figure 5

| required block size to reach channel capacity |
|---|

Figure 6

dummy information

| MAC-hs PDU | |
|---|---|

Figure 7

dummy information

| MAC-hs PDU | A | B | C | A | B | C |
|---|---|---|---|---|---|---|

repetition

Figure 8

901

| MAC-hs PDU size | ■ | ■ | ■ |
|---|---|---|---|

| MAC-hs PDU size after puncturing |
|---|

Figure 9

Figure 10

Figure 11

MAC-hs PDU + CRC attachment

| | | | |
|---|---|---|---|

C1      C3      C2      C4

| Phys. Channel 1 | Phys. Channel 3 | Phys. Channel 2 | Phys. Channel 4 |
|---|---|---|---|

Figure 12

RNC      NodeB      UE

UE ID

RRC    HS-RNTI = UE ID    RRC
RLC      RLC
MAC    NBAP    MAC    MAC
PHY      PHY      PHY

Figure 13

3xTslot = 7680 chips

HS-SCCH    | S1 | R2 | CRC |

T

HS-DSCH    | HS-DSCH sub-frame | CRC |

2xTslot = 5120 chips

3xTslot = 7680 chips

Figure 14

21

Figure 15

Figure 16

Figure 17

EP 1 432 261 A1

---

**European Patent Office**

## EUROPEAN SEARCH REPORT

Application Number

EP 02 02 8630

---

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/138721 A1 (BAE CHANG-HUN ET AL) 26 September 2002 (2002-09-26) * abstract * * paragraph [0003] - paragraph [0012] * --- | 1-62 | H04Q7/38 H04L12/56 |
| X | US 2002/172208 A1 (MALKAMAKI ESA) 21 November 2002 (2002-11-21) * abstract * * paragraph [0005] - paragraph [0008] * --- | 1,24,45, 52,60,61 | |
| A | EP 1 248 485 A (SAMSUNG ELECTRONICS CO LTD) 9 October 2002 (2002-10-09) * paragraph [0003] - paragraph [0025] * ----- | 1,24,45, 52,60,61 | |

|  |  |
|---|---|
|  | TECHNICAL FIELDS SEARCHED (Int.Cl.7) |
|  | H04Q H04L |

The present search report has been drawn up for all claims

| Place of search | Date of completion of the search | Examiner |
|---|---|---|
| MUNICH | 20 June 2003 | Harrysson, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 02 02 8630

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2003

| Patent document cited in search report | | Publication date | Patent family member(s) | | Publication date |
|---|---|---|---|---|---|
| US 2002138721 | A1 | 26-09-2002 | NONE | | |
| US 2002172208 | A1 | 21-11-2002 | WO | 02096006 A2 | 28-11-2002 |
| EP 1248485 | A | 09-10-2002 | AU | 759855 B2 | 01-05-2003 |
| | | | AU | 3139502 A | 07-11-2002 |
| | | | CA | 2380039 A1 | 03-10-2002 |
| | | | CN | 1380765 A | 20-11-2002 |
| | | | EP | 1248485 A1 | 09-10-2002 |
| | | | JP | 2002369258 A | 20-12-2002 |
| | | | US | 2002141367 A1 | 03-10-2002 |

EPO FORM P0459

For more details about this annex : see Official Journal of the European Patent Office, No. 12/82